# EUROPÄISCHE PATENTSCHRIFT

(11) **EP 2 288 462 B1**
(45) Veröffentlichungstag und Bekanntmachung des Hinweises auf die Patenterteilung: **22.02.2017**
(21) Anmeldenummer: 09745606.5
(22) Anmeldetag: 16.03.2009
(51) Int. Cl.: B23D 49/16, B23D 51/02, B23D 59/00

(54) **WERKZEUGMASCHINE, INSBESONDERE HANDGEHALTENE WERKZEUGMASCHINE**
MACHINE TOOL, PARTICULARLY HANDHELD MACHINE TOOL
MACHINE-OUTIL, EN PARTICULIER MACHINE-OUTIL PORTATIVE

(30) Priorität: 14.05.2008 DE 102008001762
(43) Veröffentlichungstag der Anmeldung: 02.03.2011
(73) Patentinhaber: Robert Bosch GmbH, 70442 Stuttgart (DE)
(72) Erfinder: DELFINI, Stefano, CH-2544 Bettlach (CH); KOEDER, Thilo, 70839 Gerlingen (DE); PLATZER, Joachim, 71686 Remseck-Hochberg (DE)
(86) Internationale Anmeldenummer: PCT/EP2009/053066
(87) Internationale Veröffentlichungsnummer: WO 2009/138273

(56) Entgegenhaltungen:
- EP-A- 1 693 136
- DE-A1-102006 049 530
- DE-U1-202004 005 478

## Beschreibung

Die Erfindung betrifft eine Werkzeugmaschine, insbesondere eine handgehaltene Werkzeugmaschine, gemäß dem Oberbegriff des Anspruches 1.

### Stand der Technik

Für Werkzeugzeugmaschinen dieser Art, die als Stich- sowie auch Kreissägen in der Praxis vielfach eingesetzt sind, ist bekannt, mit Hilfseinrichtungen zu arbeiten, die die Verfolgung einer gewünschten und aufgrund der Überdeckung durch die Maschine häufig nur unzulänglich einzusehenden Arbeitsbahn erleichtert. Hierzu erfolgt die Führung der Werkzeugmaschine orientiert an einer jeweiligen Wegvorgabe, die zur Arbeitsbahn seitlich versetzt liegt und ausgerichtet an der ein exaktes Arbeiten entlang der Arbeitsbahn erleichtert ist. Als Hilfseinrichtung ist hierbei seitlich auskragend zur Maschine ein Führungsschuh vorgesehen, der an einem zur Werkzeugmaschine verstellbaren Ausleger angeordnet ist und der entlang der zur Arbeitsbahn parallelen Wegvorgabe in Arbeitsrichtung der Werkzeugmaschine verschieblich anliegt, wobei die Wegvorgabe beispielsweise durch eine zur gewünschten Arbeitsbahn parallele Kante eines Werkstückes gebildet sein kann.

Abgesehen davon, dass solche Hilfseinrichtungen mechanisch aufwändig und bezüglich ihrer Einsatzmöglichkeiten eingeschränkt sind, bedingen sie jeweils zur Einstellung entsprechende Vorarbeiten und teilweise auch die zusätzliche Anbringung von Leisten oder dergleichen als Wegvorgabe, falls nicht aufgrund der durchzuführenden Arbeiten eine zur Arbeitsbahn entsprechende Bezugskontur als Wegvergabe bereits vorliegt. Liegt diese aber bereits vor, so häufig in einer Ausbildung, die eine unmittelbare Nützung als Bezugskontur mit den bekannten Hilfseinrichtungen zumindest erschwert.

Aus der EP 1 693 136 A1 ist eine Werkzeugmaschine, insbesondere eine Stichsäge bekannt, mit einer optischen Ausrichtungseinheit zum definierten Einstellen eines Abstandes zwischen einer geraden Markierungslinie und der Schnittlinie für die Säge. Mittels einer verstellbaren Laserlinie kann ein definierter Abstand zwischen der Schnittlinie der Säge und einer Markierungslinie eingestellt werden. Die Vorrichtung der EP 1 693 136 A1 besitzt hierzu kalibrierte Stellmittel, die es erlauben einen Abstandswert zwischen der Markierungslinie und der Schnittlinie einzustellen, so dass die Laserlinie unter einem entsprechenden Winkel auf das Werkstück projiziert wird.

Aus der DE 20 2004 005 478 U1 ist eine Vorrichtung zum Führen eines Sägeblattes in einer Stichsäge bekannt, wobei das Sägeblatt in einer Führung gehalten ist und von einem Hubantrieb längs einer Hochachse auf und ab bewegt wird. Die Vorrichtung der DE 20 2004 005478 U1 sieht vor, dass das Sägeblatt um die Hochachse schenkbar gelagert ist, wobei eine Schwenkeinrichtung vorgesehen ist, die in Abhängigkeit von dem Ausgangssignal einer Detektoreinrichtung das Sägeblatt um die Hochachse verstellt, wobei die Detektoreinrichtung mit einem Sensor zum Erfassen einer vorgegebenen Schnittlinie verbunden ist.

### Offenbarung der Erfindung

Der Erfindung liegt die Aufgabe zugrunde, für den Benutzer verbesserte Möglichkeiten zu an einer solchen Wegvorgabe orientierten und versetzten Führung der Werkzeugmaschine zu schaffen und den Benutzer zudem in seiner an der Wegvorgabe orientierten und zur Wegvorgabe seitlich versetzten Führung der Werkzeugmaschine aktiv zu unterstützen.

Diese Aufgabe wird erfindungsgemäß mit den Merkmalen des Anspruches 1 gelöst. Die Unteransprüche geben zweckmäßige Weiterbildungen an.

Verbesserte Möglichkeiten zur Führung der Werkzeugmaschine entlang einer im Offset zu einer Wegvorgabe liegenden Arbeitsbahn ergeben sich daraus, dass erfindungsgemäß als Hilfseinrichtung eine Sensoranordnung mit im Umfeld zum Arbeitsbereich des Werkzeuges liegender Detektionsfläche vorgesehen wird, zu der die Wegvorgabe einen Überdeckungsbereich aufweist, so dass ausgehend von über die Sensoranordnung erfassten Werten der Wegvorgabe die Werkzeugmaschine über eine entsprechende Führung des Werkzeuges auf die Arbeitsbahn ausgerichtet deren Bahn folgt. Die eigentliche Führung der Werkzeugmaschine liegt somit nicht beim Benutzer, über den im Wesentlichen nur der Vorschub der Werkzeugmaschine, also eine entsprechende Abstützung der Werkzeugmaschine erfolgt.

Gleichzeitig bietet die Erfindung die Möglichkeit, bei entsprechender Visualisierung der über die Sensoranordnung erfassten Gegebenheiten und Werte, sei es in der Detektionsfläche oder anderweitig, so insbesondere am Maschinengehäuse, einen Arbeitsverlauf zu überwachen und dies auch hinsichtlich der Verfolgung der Arbeitsbahn, wenn diese, was sich im Rahmen der Erfindung insbesondere als zweckmäßig erweist, ebenfalls im Überdeckungsbereich zur Detektionsfläche liegt. Solche Gegebenheiten sind insbesondere bei in der Praxis häufig kritischen Arbeiten vorhanden, wenn bestehende Konturen, wie beispielsweise der Umriss eines Einbauteils, wie etwa einer Spüle, Arbeitsbahnen bedingen, die im Offset parallel zu diesem Umriss liegen und ausgesägt werden müssen.

Dementsprechend ergibt sich auch mit der Ausgestaltung der Werkzeugmaschine als Stichsäge mit einem Sägeblatt, das um eine in seiner Längsrichtung verlaufende Drehachse drehbar ist und das über eine Stelleinheit der insbesondere die Sensoranordnung umfassenden Steuermittel entlang der Arbeitsbahn geführt wird, eine Lösung, die für die Praxis insbesondere von Bedeutung ist, da die Stichsäge in dieser Ausgestaltung eine halbautonom geführte Maschine ist, mit der sich auch bei ungeübten Benutzern gute Arbeitsergebnisse erreichen lassen.

Die Wegvorgabe kann bei der erfindungsgemäßen Lösung sowohl über eine optische wie auch über eine mechanische Markierung, also beispielsweise über einen Peilstrahl wie auch über eine Linienführung erfolgen, die sich in ihrer Lage zur Detektionsfläche mit hinreichender Genauigkeit verfolgen lässt, wobei die Umrisse der Detektionsfläche optisch und/oder mechanisch, beispielsweise durch Randbegrenzungen eines Ausschnitts, visualisiert sind. Zudem bietet die Erfindung auch gute Voraussetzungen, etwaige kritische Abweichungen der Arbeitsmaschine von der Wegvorgabe und/oder des Arbeitswerkzeuges von der Arbeitsbahn, gegebenenfalls auch entsprechend gewichtet, über Anzeigemittel zu visualisieren, so dass die für den Benutzer erleichterte Führung der Arbeitsmaschine mit guten Überwachungsmöglichkeiten der Arbeitsergebnisse wie auch der Werkzeugmaschine gepaart ist, da entsprechend der Visualisierung der für das Arbeitsergebnis bestimmenden Faktoren auch eine Visualisierung von maschinenrelevanten Informationen zweckmäßig und möglich ist.

Durch die Erfindung ist somit auch ein Verfahren zum Betrieb einer Werkzeugmaschine, insbesondere einer handgehaltenen Werkzeugmaschine, bevorzugt in der Ausgestaltung als Stichsäge, geschaffen, bei der die Werkzeugmaschine lediglich ausgerichtet an einer Wegvorgabe vom Benutzer zu halten ist und das Werkzeug selbst die Führung und Ausrichtung der Werkzeugmaschine auf eine zur Wegvorgabe versetzte Arbeitsbahn übernimmt, und zwar bei günstigen Möglichkeiten der Visualisierung der relevanten Verhältnisse, sowie insbesondere auch des Hinweises auf Abweichungen vom Regelarbeitsbetrieb und auf Gefahren sowohl durch optische wie auch akustische Signale.

Die Höhe des Versatzes kann vom Nutzer dabei in gewissen Grenzen beliebig eingestellt werden.

Weitere Einzelheiten und Merkmale der Erfindung ergeben sich aus den Ansprüchen. Ferner wird die Erfindung nachstehend anhand eines Ausführungsbeispieles erläutert. Es zeigen:
- Fig. 1: in perspektivischer Darstellung als Beispiel für eine Werkzeugmaschine gemäß der Erfindung eine Stichsäge, die als halbautonom zu betreibende Stichsäge ein Sägeblatt aufweist, das um seine Längsachse verdrehbar und über eine Aktuatorik in seiner Drehlage einstellbar ist, wobei die Stichsäge in ihrer an ein Werkstück angesetzten Arbeitslage dargestellt ist,
- Fig. 2: eine schematisierte Draufsicht auf den vom Sägeblatt durchsetzten Arbeitsbereich der Fußplatte der Stichsäge mit einer Wegvorgabe und einer hierzu im Offset liegenden, also versetzten Arbeitsbahn, und
- Fig. 3: eine schematisierte Darstellung des als Detektionsfläche genutzten Sensorbereiches.

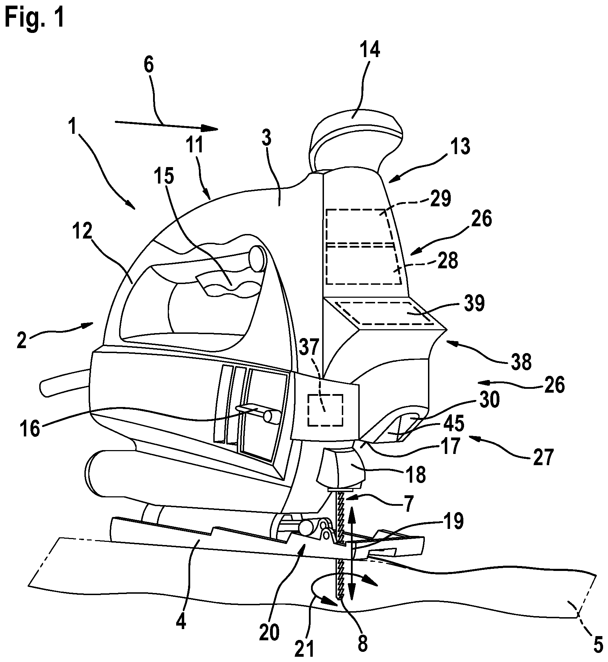

Fig. 1 veranschaulicht als Beispiel einer handgehaltenen Werkzeugmaschine 1 eine Stichsäge 2, die ein Gehäuse 3 aufweist und die über eine Fußplatte 4 auf einem Werkstück 5 abgestützt ist.

Im in Arbeitsrichtung 6 vorderen Bereich der Stichsäge 2 weist diese als Arbeitswerkzeug 7 ein Sägeblatt 8 auf. Dieses greift im Arbeitsbetrieb in das Werkstück 5 ein, auf dem die Stichsäge 2 über ihre Fußplatte 4 verschieblich abgestützt ist.

Die Stichsäge 2 weist für ihren jeweiligen Benutzer ein Sichtfeld 10 auf, das sich bevorzugt zumindest über das Gebiet des durch das Sägeblatt 8 bestimmten Arbeitsbereiches 9 erstreckt und im Regelfall, wie veranschaulicht, über diesen insbesondere in Arbeitsrichtung 6 hinausreicht, um dem Benutzer auch vorausschauend einen bestmöglichen Überblick über die Arbeitsgegebenheiten zu vermitteln.

Das Gehäuse 3 der Stichsäge 2 ist im Wesentlichen konventionell gestaltet und weist in Hochrichtung gegenüberliegend zu der um eine in Arbeitsrichtung 6 verlaufende Schwenkachse feststellbar abgestützten Fußplatte 4 eine bügelartige Handhabe 11 auf, deren Griffbügel 12 sich in Arbeitsrichtung 6 erstreckt und frontseitig in den Stirnwandbereich 13 des Gehäuses 3 einläuft. Nach oben geht diese in einen Führungsknauf 14 über.

Im Bereich der Handhabe 11 ist untergreifend zum Griffbügel 12 eine Schalteranordnung 15 vorgesehen, über die die Werkzeugmaschine 1 ein- und auszuschalten ist. Unterschiedliche Betriebsmodi der Stichsäge 2 lassen sich über die längsseitlich zum Gehäuse vorgesehene Schalteinrichtung 16 einstellen.

Der Stirnwandbereich 13 des Gehäuses ist nach unten, also in Richtung auf die Fußplatte 4 zulaufend stufig entgegen der Arbeitsrichtung 6 abgesetzt. Die dadurch entstehende Stufe 17 überdeckt die Werkzeugaufnahme 18 für das Sägeblatt 8.

Das Sägeblatt 8 der insgesamt elektrisch betriebenen Werkzeugmaschine 1 ist, wie durch den Pfeil 19 angedeutet, hubbeweglich angetrieben. Ein Stellantrieb 20 dient dazu, einen weiteren Antriebsmodus für das Sägeblatt 8 zu realisieren, nämlich einen Pendelhubbetrieb, bei dem das Sägeblatt 8 um eine quer zur Blattebene verlaufende, nicht gezeigte Schwenkachse überlagert zur Hubbewegung verschwenkbar ist.

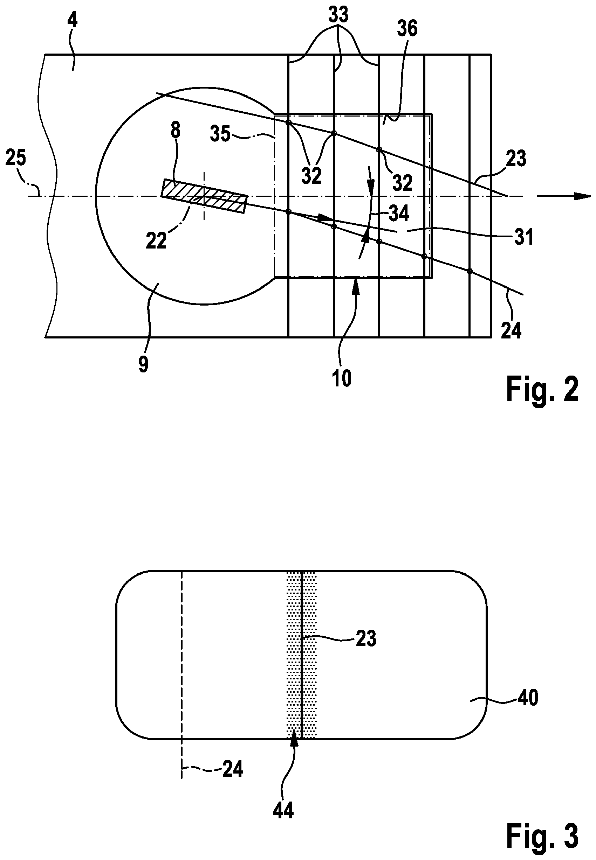

In einer dritten Betriebsweise, veranschaulicht durch den Pfeil 21, ist das Sägeblatt 8 zusätzlich zur Hubbewegung um eine in Richtung seiner Längsachse verlaufende Drehachse 22 drehbar. Dadurch ist das Sägeblatt 8, wie in Fig. 2 angedeutet, aus seiner Geradeausstellung, entsprechend einem Nullwinkel zur Längsachse 25 der Stichsäge 2, in winklige Arbeitsrichtungen verstellbar. Dadurch ist die Stichsäge 2 als sogenannte Scrolling Jigsaw nutzbar und bei entsprechend gesteuerter Verstellung als halbautonome Stichsäge 2 zu betreiben. Hierbei übernimmt der die Stichsäge 2 haltende Benutzer im Wesentlichen nur den auf die jeweilige Arbeitsrichtung 6 grob ausgerichteten Vorschub. Die exakte, auf eine Arbeitsbahn 24 ausgerichtete und dieser entsprechende Positionierung der Stichsäge 2 durch Einstellung des Sägeblattes 2 erfolgt durch die Verstellung des Sägeblattes 2.

In Fig. 2 ist die Arbeitsbahn 24 als dünne Linie veranschaulicht. Die Arbeitsbahn 24 hat, bezogen auf die angedeutete Arbeitssituation, einen Schnittpunkt mit der Drehachse 22, durch den auch die angedeutete Längsachse 25 der Stichsäge 2 verläuft. Ausgehend von der Drehachse 22 verläuft die angenommene Arbeitsbahn 24 mit zunehmendem seitlichen Versatz zur Längsachse 25 in Arbeitsrichtung 6.

Die Arbeit entlang der Arbeitsbahn 24 erfolgt ausgerichtet an einer Wegvorgabe 23, dargestellt durch eine dicke Linie. Dies entsprechend einer Arbeitssituation, bei der eine vorgegebene Kontur mit entsprechendem Versatz, also im Offset zur Wegvorgabe 23, in einer Arbeitsbahn 24 nachgeschnitten wird.

Der Erfassung derartiger Arbeitsgegebenheiten dienen Steuermittel 26, die unter anderem eine Sensoranordnung 27, eine Recheneinheit 28 und eine Stelleinheit 29 umfassen. Über die Steuermittel 26 wird das Sägeblatt 8 in seiner Drehstellung auf die Arbeitsbahn 24 ausgerichtet und liegt bei Nullwinkel in dieser. Die Stichsäge 2 bildet in dieser Ausbildung eine sogenannte Scrolling Jigsaw, die als halbautonome Stichsäge einzusetzen ist. Der Benutzer übernimmt dabei im Wesentlichen nur Vorschub und Abstützung der Stichsäge 2.

Die Sensoranordnung 27 umfasst im Ausführungsbeispiel einen als Kamera 30 ausgebildeten Sensor, dem die Recheneinheit 28 nachgeordnet ist. Die Kamera 30 der Sensoranordnung 27 ist auf eine im Bereich der Fußplatte 4 liegende Detektionsfläche 31 ausgerichtet, die dem Sensorbereich entspricht oder zumindest innerhalb desselben liegt. Innerhalb der Detektionsfläche 31 verläuft in der dargestellten Draufsicht die Wegvorgabe 23, zu der die nachzuarbeitende Arbeitsbahn 24 im Offset liegt.

Über die Sensoranordnung 27 mit der auf die Detektionsfläche 31 ausgerichteten Kamera 30 als Sensor wird die Wegvorgabe 23 in einzelnen Punkten 32 erfasst, die auf quer zur Arbeitsrichtung 6 verlaufenden, in Überdeckung zur Detektionsfläche 31 liegenden Suchzeilen 33 liegen. Dadurch können sowohl bei analoger wie auch digitaler Bildverarbeitung die über die Sensoranordnung 27 erfassten Daten an die Recheneinheit 28 weitergeleitet werden, so dass dort die Wegvorgabe 23 in ihrem Bahnverlauf, und damit auch in ihrem Verlauf zur Längsachse 25 erfasst ist.

In Berücksichtigung des gegebenen parallelen Versatzes zwischen der Wegvorgabe 23 und der Arbeitsbahn 24 als zusätzlichem Parameter werden über die Recheneinheit 28 die erfassten Daten in Steuersignale umgesetzt und an die Steuereinheit 29 übermittelt, die nun durch ein Stellglied mit Regler, zum Beispiel in Form eines Schrittmotores, dem Sägeblattwinkel 34 in Abhängigkeit von der überlagerten Benutzerführung einstellt. Als Sägeblattwinkel 34 ist der zur Längsachse 25 gegebene Anstellwinkel des Sägeblattes 8 bezeichnet.

In der Ausgestaltung gemäß Fig. 2 ist die Detektionsfläche 31 über eine Stichpunktlinie 35 umgrenzt, die sich mit den Kanten eines in der Fußplatte 4 vorgesehenen Ausschnittes 36 überdeckt, so dass die Detektionsfläche 31 bei dieser Gestaltung über die Kanten des Ausschnittes 36 mechanisch abgegrenzt und visualisiert ist. Die Detektionsfläche 31 liegt symmetrisch zur Längsachse 25, auf der die Drehachse 22 des Sägeblattes 8 liegt, das sich bei mit der Längsachse 25 zusammenfallender Arbeitsbahn 24 mit seiner Sägeblattebene in Richtung der Längsachse 25 erstreckt.

Über die Detektionsfläche 31 ist auch der Bereich - im Ausführungsbeispiel ein Bereich von etwa 1 cm beiderseits der Längsachse 25 - abgegrenzt, in dem die Stichsäge 2 unter Berücksichtigung der sensorisch erfassten Werte halbautonom geführt ist - sofern diese Führung nicht abgeschaltet ist - und somit durch die automatisierte Verstellung des Sägeblattwinkels 34 unabhängig von den Vorgaben des Benutzers auf die Arbeitsbahn 24 ausgerichtet ist. Verlässt die Wegvorgabe 23 den sensorisch erfassten, als Detektionsfläche 31 dienenden Bereich, so entfällt auch die maschinelle Unterstützung des Benutzers in der Führung der Stichsäge 2 im Offset und parallel zur Wegvorgabe 23. Deshalb wird bevorzugt ein Auswandern der Wegvorgabe 23 aus der Detektionsfläche 21 signalisiert, insbesondere optisch und/oder akustisch signalisiert, eine entsprechende akustische Warneinheit ist bei 37 angedeutet. Verbunden mit der Warnung wird zweckmäßigerweise die Maschine abgeschaltet.

Da aufgrund der halbautonomen Führung der Stichsäge 2 der Benutzer die Ausrichtung auf die Wegvorgabe 23 nur grob vornehmen muss, ist deren genaue Verfolgung und Beobachtung durch den Benutzer nicht erforderlich; vielmehr ist es ausreichend, wenn der Benutzer darüber informiert wird, dass die Wegvorgabe 24 noch durch die Detektionsfläche 31 verläuft, so dass sich der Benutzer an der Detektionsfläche 31 oder an anderweitig vorgesehenen Anzeigeelementen 38 mit einem Anzeigefeld 39 orientieren kann. Erleichtert wird dies auch durch eine auf den Arbeitsbereich 9 und/oder das Sichtfeld 10 ausgerichtete Beleuchtungsquelle 45.

Mit einer Werkzeugmaschine 1 gemäß der Erfindung kann eine Kontur, so etwa die Kontur eines Einbauteiles, wie einer Spüle parallel zur Vorgabe mit einem größeren oder kleineren Offset ausgesägt werden, und zwar ohne relavante Maßabweichungen, so dass Folgearbeiten ohne Behinderungen durchgeführt werden können. Der Betrag des jeweiligen Offsets ist beliebig einstellbar und liegt innerhalb derer Detektionsbereiches des Sensors, der durch die Detektionsfläche 31 abgegrenzt ist, innerhalb dessen die Wegvorgabe 23 verlaufen muss, gegenüber der sich entsprechend der Größe des Offsets die Arbeitsbahn 24 verlagert. Führt die Größe des Offsets dazu, dass bei entsprechendem Versatz der Arbeitsbahn 24 zur Wegvorgabe 23 Letztere nicht mehr in der Detektionsfläche liegt, so wird dies zweckmäßigerweise signalisiert und die Maschine 1 auch ausgeschaltet, da nun der halbautonome Arbeitsbetrieb mit entsprechender Unterstützung des Benutzers nicht mehr gegeben ist.

Berücksichtigt wird das Offset, indem die Mitte des Sensorbereiches, also das Imagecenter 44 verschoben und somit das System aktiv dekalibriert wird. Das Imagecenter 44 ist dabei als "Nullpunkt" ein Maß für die Ausrichtung der durch die Kamera 30 gebildeten Sensoranordnung im Verhältnis zur Lage des Sägeblattes (Nullwinkel). Dem durch die Steuermittel 26 gegebenen Stellsystem für das Sägeblatt 8 wird somit vorgetäuscht, dass es exakt mittig auf die Wegvorgabe 23 ausgerichtet ist, obwohl es real durch die Dejustierung in einem konstanten Abstand zur Wegvorgabe 23 als erkannter Linie liegt. Dadurch ist auch gewährleistet, dass eine entsprechende Skalierung der Kontur erfolgt und der Verlauf auch bei Radien stets parallel ist.

In Fig. 3 ist der Detektionsbereich insgesamt mit 40 bezeichnet, die Wegvorgabe 23 symbolisch - vorgetäuscht - als im Imagecenter liegende Linie, und stichpunktiert ist die durch den Offset erreichte Arbeitsbahn 24 angedeutet.

## Patentansprüche

1. Werkzeugmaschine, insbesondere handgehaltene Werkzeugmaschine, mit einem Arbeitsbereich (9) für ein Arbeitswerkzeug (7) zur Bearbeitung eines Werkstückes (5) und mit einer Hilfseinrichtung zur an einer Wegvorgabe (23) orientierten Führung des Arbeitswerkzeuges (7) entlang einer zur Wegvorgabe (23) versetzten Arbeitsbahn (24), **dadurch gekennzeichnet, dass** die Hilfseinrichtung eine Sensoranordnung (27) mit im Umfeld zum Arbeitsbereich (9) des Arbeitswerkzeuges (7) liegender Detektionsfläche (31, 40) umfasst, und dass die Werkzeugmaschine (1) in Berücksichtigung des Versatzes der Arbeitsbahn (24) zur Wegvorgabe (23) über das Arbeitswerkzeug (7) auf die Arbeitsbahn (24) ausgerichtet geführt ist.

2. Werkzeugmaschine nach Anspruch 1, **dadurch gekennzeichnet, dass** die Werkzeugmaschine (1) als Stichsäge (2), insbesondere als halbautonom geführte Stichsäge (2), mit einem Sägeblatt (8) ausgebildet ist, das eine in seiner Längsrichtung verlaufende Drehachse (22) aufweist und das über eine Stelleinheit (29) von insbesondere die Sensoranordnung (27) umfassenden Steuermitteln (26) entlang der Arbeitsbahn (24) geführt ist.

3. Werkzeugmaschine nach einem der vorhergehenden Ansprüche, **dadurch gekennzeichnet, dass** optische und/oder mechanische Anzeigemittel für die Lage der Detektionsfläche (31) zur Wegvorgabe (23) und/oder zur Arbeitsbahn (24) vorgesehen sind.

4. Werkzeugmaschine nach Anspruch 3, **dadurch gekennzeichnet, dass** die mechanische Anzeigemittel durch benachbart zu Arbeitsbereich (9) vorgesehene Teile der Werkzeugmaschine (9) gebildet sind.

5. Werkzeugmaschine nach Anspruch 3, **dadurch gekennzeichnet, dass** die optischen Anzeigemittel benachbart zum Arbeitsbereich (9) vorgesehen sind.

6. Werkzeugmaschine nach Anspruch 3, **dadurch gekennzeichnet, dass** die optischen Anzeigemittel beabstandet zum Arbeitsbereich (9), insbesondere am Gehäuse (3) der Werkzeugmaschine (1) vorgesehen sind.

7. Werkzeugmaschine nach einem der vorhergehenden Ansprüche, **dadurch gekennzeichnet, dass** die jeweilige Abweichung der Werkzeugmaschine (1) von der Wegvorgabe (23) und/oder des Arbeitswerkzeuges (7) der Arbeitsbahn (24), insbesondere hinsichtlich des Grades der Abweichung gewichtet; über die Anzeigemittel, insbesondere in einem Anzeigefeld eines Anzeigeelementes, visualisiert ist.

8. Verfahren zum Betrieb einer Werkzeugmaschine, insbesondere einer handgehaltenen Werkzeugmaschine, insbesondere nach einem der Ansprüche 1 bis 7, **dadurch gekennzeichnet, dass** die Werkzeugmaschine (11) ausgerichtet an einer Wegvorgabe (23) vom Benutzer gehalten über das Arbeitswerkzeug (7) entlang einer zur Wegvorgabe (23) versetzten Arbeitsbahn (24) geführt wird und dass dem Benutzer die Lage der Wegvorgabe (23) und/oder der Arbeitsbahn (24) in der Detektionsfläche (31) einer auf den Arbeitsbereich des Arbeitswerkzeuges (7) ausgerichteten Sensoranordnung (27) visualisiert wird.

9. Verfahren nach Anspruch 8, **dadurch gekennzeichnet, dass** über die Lage der Detektionsfläche (31) zur Wegvorgabe (23) Grenzlagen der Wegvorgabe (23) und/oder der Arbeitsbahn (24) zur Detektionsfläche (31) signalisiert werden.

10. Verfahren nach Anspruch 8 bis 9, **dadurch gekennzeichnet, dass** der vorgegebene Versatz zwischen Wegvorgabe (23) und Arbeitsbahn (24) von die Sensoranordnung (27) und eine Recheneinheit (28) umfassenden Steuermitteln (26) als Parameter für die über die Stelleinheit (29 einzustellende Drehstellung des Arbeitswerkzeuges (7) zur Ausrichtung der Werkzeugmaschine (1) auf die Arbeitsbahn (24) genutzt wird.

11. Verfahren nach einem der Ansprüche 8 bis 10, **dadurch gekennzeichnet, dass** Abweichungen in der über das Arbeitswerkzeug (7) erfolgenden Ausrichtung der Werkzeugmaschine (1) auf die Arbeitsbahn (24) codiert und/oder gewichtet, insbesondere durch Änderung der Intensität optischer Signale und/oder von Farbgebungen, symbolisiert wird und der Versatz frei wählbar/einstellbar ist.

12. Verfahren nach einem der Ansprüche 8 bis 11, **dadurch gekennzeichnet, dass** beim Auswandern der Wegvorgabe (23) aus der Detektionsfläche (31) ein Warnsignal, insbesondere ein zusätzliches, vor allem akustisches Wamsignal abgesetzt und/oder die Werkzeugmaschine abgeschaltet wird.

13. Verfahren zum Betrieb einer Werkzeugmaschine, insbesondere einer handgehaltenen Werkzeugmaschine, nach Anspruch 1, **dadurch gekennzeichnet, dass** zumindest die Wegvorgabe (23) einen Überdeckungs-bereich zur Detektionsfläche (31, 40) aufweist.

14. Verfahren nach Anspruch 13, **dadurch gekennzeichnet, dass** die Wegvorgabe (23) und die Arbeitsbahn (24) jeweils einen Überdeckungsbereich zur Detektionsfläche (41) aufweisen.

15. Verfahren nach Anspruch 14, **dadurch gekennzeichnet, dass** die Wegvorgabe (23) als optische und/oder mechanische Markierung vorgesehen ist.

## Claims

1. Machine tool, in particular a hand-held machine tool, having a working area (9) for a working tool (7) for machining a workpiece (5), and having an auxiliary device for the guidance of the working tool (7), aligned with a predefined path (23), along a working path (24) offset with respect to the predefined path (23), **characterized in that** the auxiliary device comprises a sensor arrangement (27) with a detection area (31, 40) lying in the surroundings of the working area (9) of the working tool (7), and **in that** the machine tool (1) is guided by the working tool (7) so as to be aligned with the working path (24), taking into account the offset of the working path (24) with respect to the predefined path (23).

2. Machine tool according to Claim 1, **characterized in that** the machine tool (1) is constructed as a jigsaw (2), in particular as a semi-autonomously guided jigsaw (2), having a saw blade (8) which has an axis of rotation (22) running in its longitudinal direction and which is guided along the working path (24) via an actuating unit (29) of control means (26) in particular comprising the sensor arrangement (27).

3. Machine tool according to one of the preceding claims, **characterized in that** optical and/or mechanical display means are provided for the position of the detection area (31) with respect to the predefined path (23) and/or with respect to the working path (24).

4. Machine tool according to Claim 3, **characterized in that** the mechanical display means are formed by parts of the machine tool (9) that are provided adjacent to the working area (9).

5. Machine tool according to Claim 3, **characterized in that** the optical display means are provided adjacent to the working area (9).

6. Machine tool according to Claim 3, **characterized in that** the optical display means are provided at a distance from the working area (9), in particular on the housing (3) of the machine tool (1).

7. Machine tool according to one of the preceding claims, **characterized in that** the respective deviation of the machine tool (1) from the predefined path (23) and/or of the working tool (7) of the working path (24), in particular with regard to the level of the deviation, is indicated in a weighted manner via the display means, in particular in a display area of a display element.

8. Method of operating a machine tool, in particular a hand-held machine tool, in particular according to one of Claims 1 to 7, **characterized in that** the machine tool (11), held by the user so as to be aligned with a predefined path (23), is guided by the working tool (7) along a working path (24) that is offset with respect to the predefined path (23), and **in that** the position of the predefined path (23) and/or the working path (24) in the detection area (31) of a sensor arrangement (27) aligned with the working area of the working tool (7) is indicated to the user.

9. Method according to Claim 8, **characterized in that** limiting positions of the predefined path (23) and/or the working path (24) with respect to the detection area (31) are signalled via the position of the detection area (31) with respect to the predefined path (23).

10. Method according to Claim 8 to 9, **characterized in that** the predefined offset between predefined path (23) and working path (24) are used by the control means (26) comprising the sensor arrangement (27) and a computing unit (28) as parameters for the rotational position of the working tool (7), to be adjusted via the actuating unit (29), for aligning the machine tool (1) with the working path (24).

11. Method according to one of Claims 8 to 10, **characterized in that** deviations in the alignment of the machine tool (1) with the working path (24), carried out via the working tool (7), are symbolized in an encoded and/or weighted manner, in particular by changing the intensity of optical signals and/or colours, and the offset can be selected/adjusted freely.

12. Method according to one of Claims 8 to 11, **characterized in that** if the predefined path (23) moves out of the detection area (31), a warning signal, in particular an additional, above all acoustic, warning signal, is output and/or the machine tool is switched off.

13. Method for operating a machine tool, in particular a hand-held machine tool, according to Claim 1, **characterized in that** at least the predefined path (23) has an overlap region with respect to the detection area (31, 40).

14. Method according to Claim 13, **characterized in that** the predefined path (23) and the working path (24) each have an overlap region with respect to the detection area (41).

15. Method according to Claim 14, **characterized in that** the predefined path (23) is provided as an optical and/or mechanical mark.

## Revendications

1. Machine-outil, en particulier machine-outil portative, comportant une zone de travail (9) destinée à un outil de travail (7) pour traiter une pièce à usiner (5) et comportant un dispositif auxiliaire destiné à guider l'outil de travail (5) de manière orientée vers un parcours prédéfini (23) le long d'un trajet de travail (24) décalé vers le parcours prédéfini (23), **caractérisé en ce que** le dispositif auxiliaire comprend un système de capteur (27) ayant une surface de détection (31, 40) se situant au voisinage de la zone de travail (9) de l'outil de travail (7), et **en ce que** la machine-outil (1) est guidée de manière orientée vers le trajet de travail (24) en tenant compte du décalage du trajet de travail (24) vers le parcours prédéfini (23) par l'intermédiaire de l'outil de travail (7).

2. Machine-outil selon la revendication 1, **caractérisée en ce que** la machine-outil (1) est configurée en tant que scie-sauteuse (2), en particulier en tant que scie-sauteuse (2) guidée de manière semi-autonome, comportant une lame de scie (8) qui présente un axe de rotation (22) s'étendant dans sa direction longitudinale et qui est guidée par l'intermédiaire d'une unité de réglage (29), en particulier par des moyens de commande (26) comprenant le système de capteur (27) le long du trajet de travail (24).

3. Machine-outil selon l'une quelconque des revendications précédentes, **caractérisée en ce qu'**il est prévu des moyens d'affichage optiques et/ou mécaniques pour la position de la surface de détection (31) vers le parcours prédéfini (23) et/ou vers le trajet de travail (24).

4. Machine-outil selon la revendication 3, **caractérisée en ce que** les moyens d'affichage mécaniques sont constitués par des parties de la machine-outil (9) qui sont disposées au voisinage de la zone de travail (9).

5. Machine-outil selon la revendication 3, **caractérisée en ce que** les moyens d'affichage optiques sont disposés au voisinage de la zone de travail (9).

6. Machine-outil selon la revendication 3, **caractérisée en ce que** les moyens d'affichage optiques sont disposés de manière espacée de la zone de travail (9), en particulier sur le boitier (3) de la machine-outil (1).

7. Machine-outil selon l'une quelconque des revendications précédentes, **caractérisée en ce que** l'écart respectif de la machine-outil (1) par rapport au parcours prédéfini (23) et/ou de l'outil de travail (7) du trajet de travail (24), en particulier en ce qui concerne le degré d'écart, est pondéré ; et est visualisé par l'intermédiaire des moyens d'affichage, en particulier dans un champ d'affichage d'un élément d'affichage.

8. Procédé de mise en fonctionnement d'une machine-outil, en particulier, d'une machine-outil portative, en particulier selon l'une quelconque des revendications 1 à 7, **caractérisé en ce que** la machine-outil (11) est guidée de manière orientée vers un parcours prédéfini (23) le long d'un trajet de travail (24) décalé vers le parcours prédéfini (23) en étant tenu par l'utilisateur par l'intermédiaire de l'outil de travail (7) et **en ce que** la position du parcours prédéfini (23) et/ou du trajet de travail (24) est visualisée dans la surface de détection (31) d'un système de capteur (27) orienté vers la zone de travail de l'outil de travail (7).

9. Procédé selon la revendication 8, **caractérisé en ce que** des positions limites du parcours prédéfini (23) et/ou du trajet de travail (24) par rapport à la surface de détection (31) sont signalisées par l'intermédiaire des positions de la surface de détection (31) par rapport au parcours prédéfini (23).

10. Procédé selon les revendications 8 à 9, **caractérisé en ce que** le décalage prédéterminé entre le parcours prédéfini (23) et le trajet de travail (24) est utilisé par le système de capteur (27) et par des moyens de commande (26) comprenant une unité de calcul (28) en tant que paramètres pour la position en rotation de l'outil de travail (7) devant être réglée par l'intermédiaire de l'unité de réglage (29), afin d'orienter la machine-outil (1) vers le trajet de travail (24).

11. Procédé selon l'une quelconque des revendications 8 à 10, **caractérisé en ce que** des écarts affectant l'orientation de la machine-outil (1) obtenus par l'intermédiaire de l'outil de travail (7) vers le trajet de travail (24) sont codés et/ou pondérés, en particulier par modification de l'intensité de signaux optiques et/ou est symbolisée par des coloris et le décalage peut être librement sélectionné/réglé.

12. Procédé selon l'une quelconque des revendications 8 à 11, **caractérisé en ce que**, lorsque le parcours prédéfini (23) sort de la surface de détection (31), un signal d'alarme, en particulier un signal d'alarme supplémentaire principalement acoustique, est délivré et/ou **en ce que** la machine-outil est désactivée.

13. Procédé de mise en fonctionnement d'une machine-outil, en particulier d'une machine-outil portative, selon la revendication 1, **caractérisé en ce que** le parcours prédéfini (23) comporte au moins une zone de recouvrement de la surface de détection (31, 40).

14. Procédé selon la revendication 13, **caractérisé en ce que** le parcours prédéfini (23) et le trajet de travail (24) comportent respectivement une zone de recouvrement de la surface de détection (41).

15. Procédé selon la revendication 14, **caractérisé en ce que** le parcours prédéfini (23) est prévu sous la forme d'un marquage optique et/ou mécanique.
